# EUROPÄISCHE PATENTSCHRIFT

(11) **EP 0 769 424 B1**
(45) Veröffentlichungstag und Bekanntmachung des Hinweises auf die Patenterteilung: **11.07.2001**
(21) Anmeldenummer: 96115813.6
(22) Anmeldetag: 02.10.1996
(51) Int. Cl.: B60R 21/20

(54) **Baugruppe aus einem Lenkrad, einer Lenkwelle sowie einem Gasgenerator**
Subassembly comprising a steering wheel, a steering column shaft and a gas generator
Sous-ensemble comprenant un volant, un arbre de colonne de direction et un générateur de gaz

(30) Priorität: 20.10.1995 DE 29516621 U
(43) Veröffentlichungstag der Anmeldung: 23.04.1997
(73) Patentinhaber: TRW Occupant Restraint Systems GmbH & Co. KG, 73551 Alfdorf (DE)
(72) Erfinder: Heilig, Alexander, 73550 Wissgoldingen (DE); Bigi, Dante, Dr., 73557 Mutlangen (DE)
(74) Vertreter: Degwert, Hartmut, Dipl.-Phys.

(56) Entgegenhaltungen:
- DE-U- 9 407 808
- US-A- 5 342 089

## Beschreibung

Die Erfindung betrifft eine Baugruppe aus einem Lenkrad, einer mit diesem drehfest verbundenen Lenkwelle und einem Gasgenerator zum Entfalten eines in dem Lenkrad angeordneten Gassacks, gemäß dem Oberbegriff des Anspruchs 1. Eine solche Baugruppe ist aus der DE-U-94 07 808 bekannt.

Bei herkömmlichen Baugruppen wird im Bedarfsfall der üblicherweise im Inneren des Lenkrades angeordnete Gasgenerator gezündet, so daß ein ebenfalls im Inneren des Lenkrades angeordneter Gassack aufgeblasen wird und eine Schutzwirkung für den Fahrer eines Kraftfahrzeugs im Falle eines Frontalaufpralls bereitstellt.

Die Aufgabe der Erfindung liegt darin, einen in den Hohlraum einer Lenkwelle eingesetzten Gasgenerator auf einfache und sichere Weise zu befestigen.

Zu diesem Zweck ist vorgesehen, eine Baugruppe der eingangs genannten Art gemäß den kennzeichnenden Merkmalen des Anspruchs 1 weiterzubilden.

Weitere Merkmale der Erfindung ergeben sich aus den Unteransprüchen.

Die Erfindung wird nachfolgend unter Bezugnahme auf die beigefügte Zeichnung beschrieben, in der verschiedene Ausführungsformen einer erfindungsgemäßen Baugruppe dargestellt sind. In der Zeichnung zeigen:
- Figur 1 schematisch eine erste Ausführungsform der Erfindung in einem Längsschnitt;
- Figur 2 schematisch eine zweite Ausführungsform der Erfindung in einem Längsschnitt;
- Figur 3 schematisch eine dritte Ausführungsform der Erfindung in einem Längsschnitt;
- Figur 4 schematisch eine Variante der Ausführungsform von Figur 3 in einem Längsschnitt.

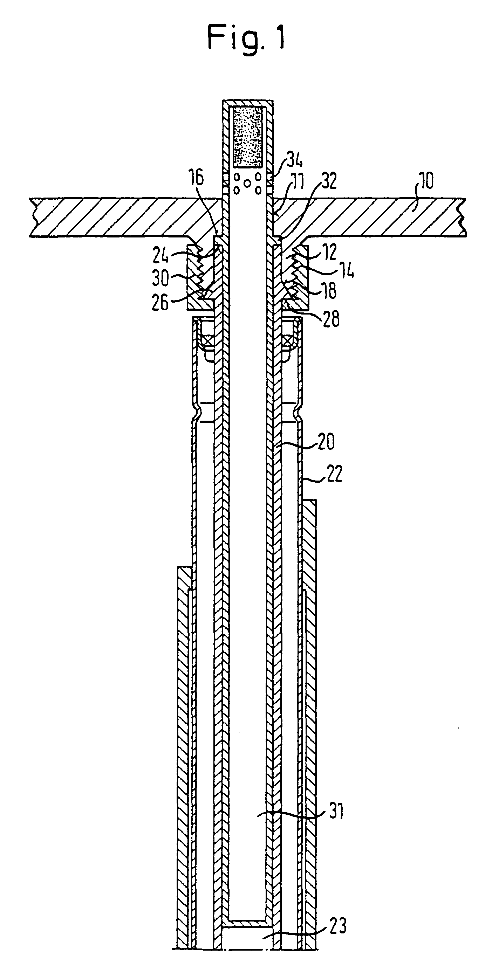

In Figur 1 ist schematisch eine erste Ausführungsform einer erfindungsgemäßen Baugruppe dargestellt. Das (nicht dargestellte) Lenkrad enthält eine ausschnittsweise dargestellte Nabe 10, die mit einer Öffnung 11 versehen ist, welche die Innenseite der Nabe 10 mit dem Außenraum verbindet. Konzentrisch um diese Öffnung herum ist ein hülsenartiger Fortsatz 12 gebildet, der mit einem Außengewinde 14 versehen ist. Der Innendurchmesser des Fortsatzes 12 ist größer als der Innendurchmesser der Öffnung 11, so daß am Übergang zwischen dem Fortsatz 12 und der Nabe 10 auf der Innenseite des Fortsatzes eine kreisringförmige Spannfläche 16 gebildet ist. An seinem freien Ende weist der Fortsatz 12 eine kegelförmige Aufnahme 18 auf.

Die Nabe 10 ist drehfest mit einer Lenkwelle 20 verbunden, die in einem Mantelrohr 22 drehbar gelagert ist. Die Lenkwelle 20 ist hohl ausgebildet und weist einen sich entlang ihrer Längsachse erstreckenden Hohlraum 23 auf. Die kreisringförmige Stirnfläche der Lenkwelle 20 an ihrem dem Lenkrad zugeordneten Ende bildet eine Abstützfläche 24. In einem gewissen Abstand von der Abstützfläche 24 ist auf dem Außenumfang der Lenkwelle 20 ein konusartiger Ansatz 26 gebildet, der auf seiner von dem Lenkrad abgewandten Seite eine kreisringförmige Anlagefläche 28 aufweist, an der der Bund einer Überwurfmutter 30 anliegt, die auf das Gewinde 14 aufgeschraubt ist und die Lenkwelle drehfest mit der Nabe 10 verspannt.

In den Hohlraum der Lenkwelle 20 ist ein allgemein zylindrischer Gasgenerator 31 eingesetzt, der mit einem radial über den Außenumfang des Gehäuses hervorstehenden Bund 32 versehen ist. Dieser Bund ist zwischen der Spannfläche 16 und der Abstützfläche 24 eingespannt, so daß der Gasgenerator in der axialen Richtung der Lenkwelle 20 festgelegt ist. Das Gehäuse des Gasgenerators erstreckt sich durch die Bohrung 11 in das Innere der Nabe 10 hinein, und in diesem Bereich des Gehäuses sind Ausströmöffnungen 34 vorgesehen, durch die das von einer (nicht dargestellten) Gaserzeugungsladung im Bedarfsfall erzeugte Gas in die Nabe 10 des Lenkrades einströmen und einen dort angeordneten Gassack entfalten kann.

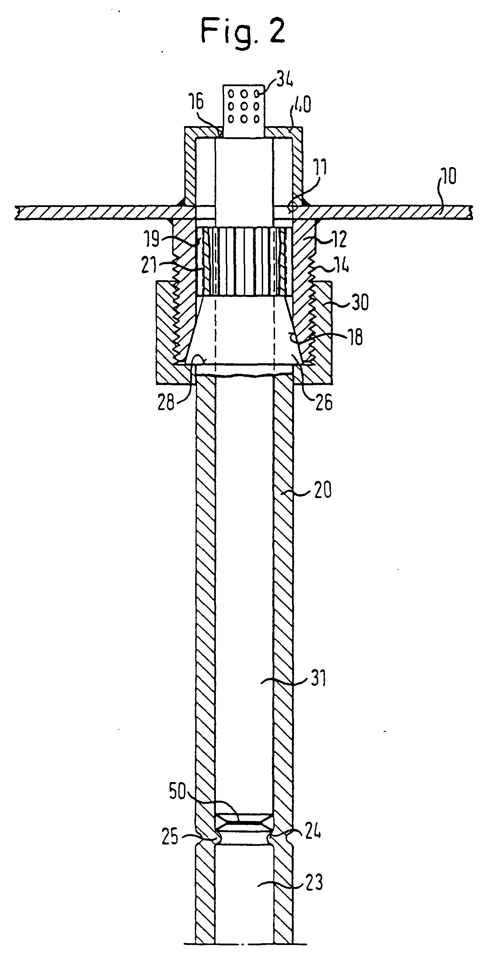

In Figur 2 ist eine weitere Ausführungsform der Erfindung dargestellt. Hinsichtlich der aus der vorangegangenen Ausführungsform bekannten Bauelemente wird auf die vorangehenden Erläuterungen verwiesen. Auch bei dieser Ausführungsform sind die Nabe 10 und der Fortsatz 12 zu sehen. Der Fortsatz ist zusätzlich zur kegelartigen Aufnahme 18 mit einem Keilnabenprofil 19 versehen, welches komplementär zu einem Keilwellenprofil 21 ist, welches auf der Lenkwelle 20 gebildet ist. Auf der Innenseite der Nabe ist ein becherartiges Halteteil 40 angebracht, welches mit einer zur Bohrung 11 in der Nabe 10 konzentrischen Öffnung versehen ist und an dessen Innenseite, diese Bohrung umgebend, die Spannfläche 16 gebildet ist. Auch bei dieser Ausführungsform ist die Lenkwelle 20 hohl, und sie weist in einem gewissen Abstand von ihrem dem Lenkrad zugeordneten Ende auf ihrer Innenseite einen radial nach innen hervorstehenden Wulst 25 auf, an dem die Abstützfläche 24 gebildet ist. Auch bei dieser Ausführungsform ist der Gasgenerator 30 zwischen der Spannfläche 16 und der Abstützfläche 24 eingespannt, wobei zwischen das der Abstützfläche 24 zugeordnete Ende des Gasgenerators und der Abstützfläche 24 selbst zwei Tellerfederelemente 50 eingesetzt sind, welche Fertigungstoleranzen ausgleichen können.

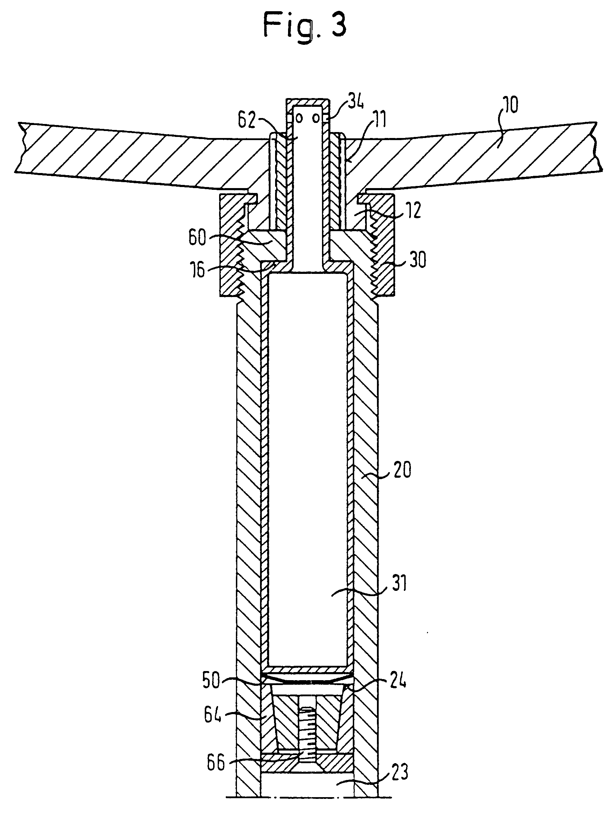

In Figur 3 ist eine weitere Ausführungsform der Erfindung dargestellt. Hinsichtlich der bereits aus den beiden vorangegangenen Ausführungsformen bekannten Bauelemente wird auf die dort gegebenen Erläuterungen verwiesen. Im Gegensatz zu den vorangegangenen Ausführungsformen weist die Lenkwelle an ihrem der Nabe 10 zugeordneten Ende einen in den Hohlraum 23 hineinragenden Ansatz 60 auf, so daß eine kreisringförmige Schulter gebildet ist, welche die Spannfläche 16 bildet. Der Gasgenerator 31 weist an seinem dem Lenkrad zugeordneten Ende einen im Durchmesser verjüngten Fortsatz 62 auf, so daß zwischen dem Fortsatz 62 und dem Gehäuse des Gasgenerators 31 eine ebenfalls kreisringförmige Schulter gebildet ist, die an der Spannfläche 16 anliegt. Die Abstützfläche 24 ist durch ein in den Hohlraum 23 der Lenkwelle 20 eingesetztes Widerlagerelement 64 gebildet, das axial mittels einer Schraube 66 verspannt ist. Bei dieser Ausführungsform ist zwischen die Abstützfläche 24 und den Gasgenerator ein Tellerfederelement 50 eingesetzt.

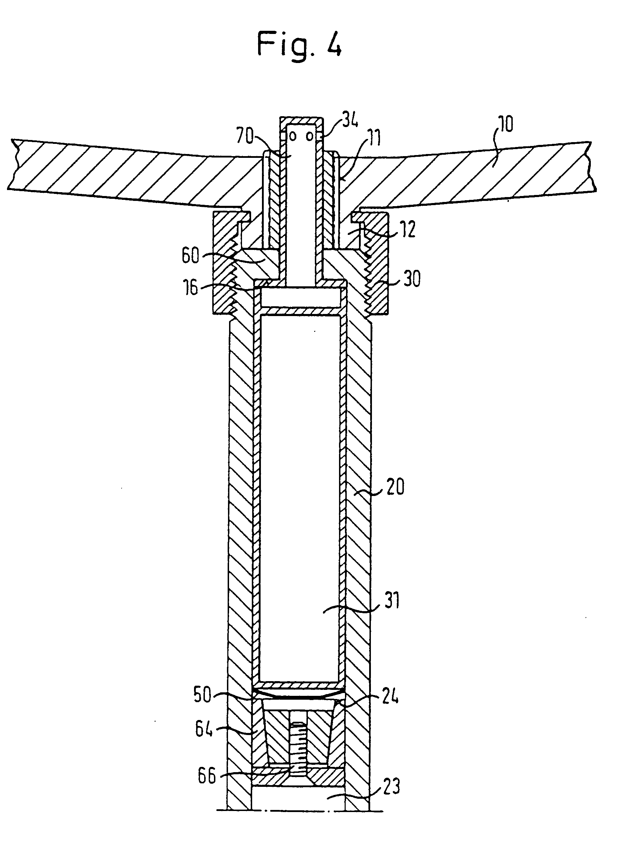

In Figur 4 ist eine Variante der Ausführungsform von Figur 3 dargestellt. Bei dieser Ausführung endet der Gasgenerator in der Lenkwelle, und (bezüglich der Figur) oberhalb des Gasgenerators 31 ist ein separates Rohrelement 70 in die Lenkwelle 20 eingesetzt, welches sich an der Spannfläche 16 abstützt und sich bis in das Innere der Nabe 10 hinein erstreckt. Durch die Anordnung der Ausströmöffnungen 34 an dem im Inneren der Nabe 10 angeordneten Ende des Rohrelementes 70 kann die Einströmrichtung des vom Gasgenerator 31 gegebenenfalls erzeugten Gases in einen in der Nabe 10 angeordneten Gassack beeinflußt werden.

Durch die erfindungsgemäße Ausgestaltung der Baugruppe ergeben sich die folgenden Vorteile: Da der Gasgenerator nicht mehr im Lenkrad selbst angeordnet ist, weist dieses ein geringeres Gewicht und eine geringere Baugröße auf. Die Festlegung des Gasgenerators erfolgt in besonders einfacher Weise, da er nur in das Innere der Lenkwelle eingeschoben werden muß. Die Festlegung in der axialen Richtung der Lenkwelle erfolgt beim Anbringen des Lenkrades auf der Lenkwelle, bei dem der Gasgenerator zwischen der Abstützfläche und der Spannfläche festgespannt wird. Bei allen diesen Ausführungsformen wird vorzugsweise eine Überwurfmutter zur Befestigung des Lenkrades an der Lenkwelle verwendet, welche weitere Vorteile bietet. Zum einen erleichtert sie die Verwendung einer hohlen Lenkwelle und eines sich bis in das Innere der Nabe hineinerstreckenden Gasgenerators, und zum anderen ist diese Überwurfmutter von außerhalb der Nabe zugänglich, so daß die in der Lenkradnabe anzuordnenden Komponenten des Gassack-Rückhaltesystems bereits in das Lenkrad eingebaut werden können, bevor dieses mit der Lenkwelle verbunden ist.

## Patentansprüche

1. Baugruppe aus einem Lenkrad, einer mit diesem drehfest verbundenen Lenkwelle (20) und einem Gasgenerator (31) zum Entfalten eines in dem Lenkrad angeordneten Gassackes, wobei:
- die Lenkwelle (20) einen sich entlang ihrer Längsachse erstreckenden Hohlraum (23) aufweist, der wenigstens an dem dem Lenkrad zugeordneten Ende der Lenkwelle (20) mündet;
- das Lenkrad eine Nabe (10) und in dieser eine Öffnung (11) aufweist, über die der Hohlraum (23) mit dem Innenraum der Nabe (10) in Strömungsverbindung steht;
- in den Hohlraum (23) der Gasgenerator (31) eingesetzt ist, der ein langgestrecktes Gehäuse aufweist; und
- der Gasgenerator (31) axial in dem Hohlraum (23) der Lenkwelle (20) festgelegt ist;
dadurch gekennzeichnet, daß der Gasgenerator (31) zwischen einer Abstützfläche (24) und einer Spannfläche (16) axial verspannt ist.

2. Baugruppe nach Anspruch 1 dadurch gekennzeichnet, daß die Abstützfläche (24) durch die Stirnseite der Lenkwelle (20) an ihrem dem Lenkrad zugewandten Ende gebildet ist, daß die Spannfläche (16) durch die die Öffnung (11) umgebende Fläche auf der Außenseite der Nabe (10) gebildet ist und daß das Gehäuse des Gasgenerators (31) mit einem radial nach außen hervorstehenden Bund (32) versehen ist, der zwischen der Spannfläche (16) und der Abstützfläche (24) festgelegt ist.

3. Baugruppe nach Anspruch 2, dadurch gekennzeichnet, daß das Gehäuse des Gasgenerators (31) durch die Öffnung (11) hindurch in den Innenraum der Nabe (10) verlängert ist.

4. Baugruppe nach Anspruch 1, dadurch gekennzeichnet, daß an der Innenseite der Nabe (11) ein becherartiges Halteteil (40) vorgesehen ist, an welchem die Spannfläche (16) gebildet ist, daß ein radial nach innen hervorstehender Wulst (25) auf der Innenseite der Lenkwelle (20) vorgesehen ist, an dem die Abstützfläche (24) gebildet ist, und daß das Gehäuse des Gasgenerators (31) zwischen der Spannfläche (16) und der Abstützfläche (24) festgelegt ist.

5. Baugruppe nach Anspruch 4, dadurch gekennzeichnet, daß zwischen der Abstützfläche (24) und dem Gasgenerator (31) eine Feder (50) angeordnet ist.

6. Baugruppe nach Anspruch 1, dadurch gekennzeichnet, daß die Spannfläche (16) an einem den Innendurchmesser des Hohlraumes (23) an dem dem Lenkrad zugeordneten Ende verringernden Absatz (60) gebildet ist, daß die Abstützfläche (24) an einem in den Hohlraum (23) eingebrachten, in diesem verspannten Widerlagerelement (64) gebildet ist, und daß das Gehäuse des Gasgenerators (31) zwischen Spannfläche (16) und Abstützfläche (24) festgelegt ist.

7. Baugruppe nach Anspruch 6, dadurch gekennzeichnet, daß zwischen der Spannfläche (16) und dem dem Lenkrad zugeordneten Ende des Gasgenerators (31) ein Rohrelement (70) eingespannt ist, das sich durch die Öffnung (11) hindurch in den Innenraum der Nabe (10) erstreckt.

8. Baugruppe nach einem der vorhergehenden Ansprüche, dadurch gekennzeichnet, daß das Lenkrad mit der Lenkwelle (20) mittels einer Überwurfmutter (30) verbunden ist.

## Claims

1. An assembly comprising a steering wheel, a steering shaft (20) connected to same in such a manner as to prevent relative rotation, and a gas generator (31) to deploy a gas bag arranged inside the steering wheel, wherein:
- the steering shaft (20) has a cavity (23) extending along its longitudinal axis and opening at least at the end of the steering shaft (20) which is adjacent to the steering wheel;
- the steering wheel has a hub (10) and an opening (11) in the hub, through which the cavity (23) is in fluid communication with the interior of the hub (10);
- the gas generator (31) is arranged in the cavity (23) and has an elongated housing; and
- the gas generator (31) is axially locked in place in the cavity (23) of the steering shaft (20);
characterized in that the gas generator (31) is axially clamped between a support surface (24) and a clamping surface (16).

2. The assembly as claimed in claim 1, characterized in that the support surface (24) is formed by the end face of the steering shaft (20) at its end facing the steering wheel, in that the clamping surface (16) is formed by the surface surrounding the opening (11) on the outer side of the hub (10), and in that the housing of the gas generator (31) is provided with a collar (32) projecting radially outwards which is fixed in place between the clamping surface (16) and the support surface (24).

3. The assembly as claimed in claim 2, characterized in that the housing of the gas generator (31) is extended through the opening (11) into the interior of the hub (10).

4. The assembly as claimed in claim 1, characterized in that on the inner side of the hub (10) a cup-like holding portion (40) is provided, on which the clamping surface (16) is formed, in that on the inner side of the steering shaft (20) a bead (25) projecting radially inwards is provided, on which the support surface (24) is formed, and in that the housing of the gas generator (31) is fixed in place between the clamping surface (16) and the support surface (24).

5. The assembly as claimed in claim 4, characterized in that a spring (50) is arranged between the support surface (24) and the gas generator (31).

6. The assembly as claimed in claim 1, characterized in that the clamping surface (16) is formed on a shoulder (60) reducing the inner diameter of the cavity (23) at the end adjacent to the steering wheel, in that the support surface (24) is formed on an abutment element (64) placed in the cavity (23) and clamped in same, and in that the housing of the gas generator (31) is fixed in position between the clamping surface (16) and the support surface (24).

7. The assembly as claimed in claim 6, characterized in that a tube element (70) is clamped between the clamping surface (16) and the end of the gas generator (31) adjacent to the steering wheel, such tube element extending through the opening (11) into the interior of the hub (10).

8. The assembly as claimed in any one of the preceding claims, characterized in that the steering wheel is connected with the steering shaft (20) by means of a sleeve nut (30).

## Revendications

1. Ensemble constitué par un volant de direction, un arbre de direction (20) relié de façon solidaire en rotation avec celui-ci, et un générateur de gaz (31) servant à déployer un coussin à gaz agencé dans le volant de direction,
- l'arbre de direction (20) présentant une cavité (23) qui s'étend le long de son axe longitudinal et qui débouche au moins à l'extrémité, associée au volant de direction, de l'arbre de direction (20) ;
- le volant de direction présentant un moyeu (10) et dans celui-ci une ouverture (11) au moyen de laquelle la cavité (23) se trouve en liaison d'écoulement avec l'intérieur du moyeu (10) ;
- le générateur de gaz (31), qui présente un carter allongé, étant inséré dans la cavité (23) ; et
- le générateur de gaz (31) étant fixé axialement dans la cavité (23) de l'arbre de direction (20) ;
caractérisé en ce que le générateur de gaz (31) est serré axialement entre une surface d'appui (24) et une surface de serrage (16).

2. Ensemble selon la revendication 1, caractérisé en ce que la surface d'appui (34) est constituée par la face frontale de l'arbre de direction (20) à son extrémité tournée vers le volant de direction, en ce que la surface de serrage (16) est constituée par la surface qui entoure l'ouverture (11) sur le côté extérieur du moyen (10) et en ce que le carter du générateur de gaz (31) est pourvu d'une collerette (32) qui fait saillie radialement vers l'extérieur et qui est fixée entre la surface de serrage (16) et la surface d'appui (24).

3. Ensemble selon la revendication 2, caractérisé en ce que le carter du générateur de gaz (31) est prolongé à travers l'ouverture (11) dans l'intérieur du moyeu (10).

4. Ensemble selon la revendication 1, caractérisé en ce qu'il est prévu sur la face intérieure du moyeu (11) une pièce de fixation (40) en forme de vase, sur laquelle est formée la surface de serrage (16), en ce qu'il est prévu sur la face intérieure de l'arbre de direction (20) un bourrelet (25) qui fait saillie radialement vers l'intérieur et sur lequel est formée la surface d'appui (24), et en ce que le carter du générateur de gaz (31) est fixé entre la surface de serrage (16) et la surface d'appui (24).

5. Ensemble selon la revendication 4, caractérisé en ce qu'un ressort (50) est disposé entre la surface d'appui (24) et le générateur de gaz (31).

6. Ensemble selon la revendication 1, caractérisé en ce que la surface de serrage (16) est formée sur un gradin (60) qui rétrécit le diamètre intérieur de la cavité (23) à l'extrémité associée au volant de direction, en ce que la surface d'appui (24) est formée sur un élément de butée (64) logé dans la cavité (23) et serré dans celle-ci, et en ce que le carter du générateur de gaz (31) est fixé entre la surface de serrage (16) et la surface d'appui (24).

7. Ensemble selon la revendication 6, caractérisé en ce qu'entre la surface de serrage (16) et l'extrémité, associée au volant de direction, du générateur de gaz (31) est serré un élément tubulaire (70) qui s'étend à travers l'ouverture (11) dans l'intérieur du moyeu (10).

8. Ensemble selon l'une quelconque des revendications précédentes , caractérisé en ce que le volant de direction est relié à l'arbre de direction (20) au moyen d'un écrou de raccordement (30).
